# EUROPÄISCHE PATENTSCHRIFT

(11) **EP 0 743 479 B1**
(45) Veröffentlichungstag und Bekanntmachung des Hinweises auf die Patenterteilung: **20.08.1997**
(21) Anmeldenummer: 95107186.9
(22) Anmeldetag: 11.05.1995
(51) Int. Cl.: F16L 1/00, F16L 37/14

(54) **Anordnung zum Anschluss eines Metallrohrs an eine Aufnahmehülse**
Arrangement for connecting a metal pipe to a receiving sleeve
Arrangement pour la connexion d'un tuyau métallique dans un manchon d'insertion

(43) Veröffentlichungstag der Anmeldung: 20.11.1996
(73) Patentinhaber: BENTELER AG, D-33104 Paderborn (DE)
(72) Erfinder: Kleinschmidt, Jürgen, D-37688 Beverungen (DE)
(74) Vertreter: Bockermann, Rolf, Dipl.-Ing.

(56) Entgegenhaltungen:
- EP-A- 0 444 304
- DE-A- 3 440 753
- DE-B- 1 204 894
- US-A- 4 059 295

## Beschreibung

Die Erfindung betrifft eine Anordnung zum dichten Anschluß eines Metallrohrs an eine Aufnahmehülse gemäß den Merkmalen im Oberbegriff des Anspruchs 1.

In vielen Bereichen der Technik wird der schnelle, lösbare und dichte Anschluß eines Metallrohrs, insbesondere geringer Nenngröße, an eine Aufnahmehülse verlangt, die einen Bestandteil eines örtlich fest installierten oder auch beweglichen Aggregats, beispielsweise eines Gehäuses, bildet bzw. endseitig einer Leitung, insbesondere eines Schlauchs, befestigt ist.

Bislang wurde zur Verbindung eines solchen Metallrohrs mit einer Aufnahmehülse eine einstückige Kunststoffhülse verwendet, die mit der Aufnahmehülse dicht verriegelt wird. Dabei wird die Kunststoffhülse auf das Metallrohr geklebt. Nachteilig an dieser Gestaltung des Metallrohrendes ist nicht nur die Verwendung unterschiedlicher Werkstoffe (Metall, Kunststoff), sondern auch der Sachverhalt, daß die Kunststoffhülse auf das Metallrohr geklebt wird. Hiermit sind erhebliche Probleme bei der Entsorgung sowie beim Recyclen verbunden. Ferner erfordert das Kleben spezielle Trocknungs- und Härtezeiten, und zwar insbesondere dann, wenn die in Rede stehende Verbindung dort eingesetzt wird, wo höhere Betriebstemperaturen zwischen z.B. 100 °C und 150 °C herrschen. Dies ist z.B. in dem Kühlsystem eines Kraftfahrzeugmotors der Fall. Desweiteren sind die Mehrzahl der zur Festlegung von Kunststoffhülsen auf Metallrohren in Frage kommenden Kleber toxisch und bereiten somit nicht unerhebliche Umweltprobleme. Darüberhinaus ist die Anzahl der einsatzfähigen Kleber dadurch eingeschränkt, daß nur wenige Kleber größere Temperatur-Wechselbelastungen über einen befriedigenden Zeitraum aushalten. Frühzeitige Alterungserscheinungen führen jedoch zu Undichtigkeiten, insbesondere in einem Kühlsystem eines Kraftfahrzeugmotors. Dies bedingt, daß allein schon während der normalen Lebensdauer eines Kraftfahrzeugs im Rahmen der regelmäßigen Serviceleistungen die Verbindungen zwischen Metallrohren und Aufnahmehülsen mehrfach ausgewechselt werden müssen.

Der Erfindung liegt ausgehend vom Stand der Technik die Aufgabe zugrunde, eine Anordnung zum dichten Anschluß eines Metallrohrs an eine Aufnahmehülse zu schaffen, die unter Vermeidung von Umwelt- und Entsorgungsproblemen leicht herstellbar ist, eine lange Lebensdauer besitzt und auch nachträglich ohne weiteres gegen herkömmliche Anordnungen austauschbar ist.

Die Lösung dieser Aufgabe besteht nach der Erfindung in den im kennzeichnenden Teil des Anspruchs 1 aufgeführten Merkmalen.

Danach wird jetzt auf das Ende eines Metallrohrs eine aus Metall bestehende Steckhülse gesetzt. Diese Steckhülse wird durch Umformung aus einem Rohrabschnitt gebildet. Sie setzt sich aus drei Längenabschnitten zusammen, und zwar einem zylindrischen Fixierabschnitt, einem zylindrischen Kupplungsabschnitt und einem konischen Übergangsabschnitt zwischen dem Fixierabschnitt und dem Kupplungsabschnitt.

Der zylindrische Fixierabschnitt dient der Festlegung der Steckhülse auf dem Rohrende, während der Kupplungsabschnitt mit den Zungen zur lösbaren Verbindung der Steckhülse mit der Aufnahmehülse herangezogen wird. Hierbei fassen beim Einschieben der Steckhülse in die Aufnahmehülse die Zungen in die diametral einander gegenüberliegenden Nuten, wobei dann durch das Zusammenwirken der Zungen mit den Nuten die Verdrehsicherung gewährleistet ist. Um eine Lageverwechslung zu vermeiden, weisen sowohl die Nuten als auch die Zungen an beiden Umfangsabschnitten von Kupplungsabschnitt und Aufnahmehülse unterschiedliche Breiten und unterschiedliche Tiefen auf, so daß die Kupplungslage von Steckhülse und Aufnahmehülse einwandfrei bestimmt ist. Eine Fehlkupplung ist ausgeschlossen.

Die äußere Oberfläche des Fixierabschnitts bildet zusammen mit der äußeren Oberfläche des konischen Übergangsabschnitts sowie inneren Oberflächen der Aufnahmehülse außerdem Dichtflächen zur Anlage von Dicht- und Stützelementen. Insbesondere gelangen hierbei ein O-förmiger Dichtring sowie ein trapezförmiger Stützring in Nebeneinanderlage zur Anwendung.

Die zug- und druckfeste Fixierung der Steckhülse in der Aufnahmehülse wird insbesondere durch eine U-förmige Klammer sichergestellt, welche mit ihren beiden Schenkeln tangentiale Schlitze in den beiden Hülsen durchsetzt. Die U-förmige Klammer ist bevorzugt federnd ausgebildet. Sie besteht aus Metall.

Ein Vorteil der Erfindung liegt darin, daß jetzt eine metallische Steckhülse auf einem Metallrohr festgelegt werden kann. Damit sind nicht mehr unterschiedliche Werkstoffe vorhanden, die zu Problemen bei der Entsorgung und/oder beim Recyclen führen. Auch können jetzt jegliche Kleber mit ihren Problemen hinsichtlich der Toxizität und Trocknungs- und Härtezeiten entfallen. Die hiermit verbundenen Umwelt- und Standzeitschwierigkeiten gelangen somit ebenfalls in Fortfall. Vorzeitige Alterungserscheinungen sind nicht mehr zu befürchten, so daß eine lange Lebensdauer der Verbindung selbst bei einem häufigen Lösen und Wiederzusammenfügen gewährleistet werden kann.

Die Lagesicherung der Steckhülse in der Aufnahmehülse wird durch die spezielle Gestaltung der Zungen entsprechend den Merkmalen des Anspruchs 2 noch weiter verbessert.

Die Einführungsfase zwischen der Stirnseite und der äußeren Oberfläche am freien Ende des Fixierabschnitts erlaubt nach Anspruch 3 ein gerichtetes Zusammenfügen von Steckhülse und Aufnahmehülse.

Die Festlegung der Steckhülse auf dem Metallrohr kann nach Anspruch 4 dadurch erfolgen, daß der Fixierabschnitt auf die äußere Oberfläche des Metallrohrs gepreßt ist.

Statt der Pressung oder auch zusätzlich kann die Festlegung der Steckhülse auf dem Metallrohr entsprechend den Merkmalen des Anspruchs 5 aber auch durch Schweißen erfolgen. Vorteilhaft ist beispielsweise das Kondensatorentladungsschweißen.

Eine weitere Art der Festlegung der Steckhülse auf dem Metallrohr wird nach Anspruch 6 darin gesehen, daß der Fixierabschnitt durch Löten mit dem Metallrohr verbunden ist. Das Löten kann ebenfalls zusammen mit einer Preßverbindung des Fixierabschnitts und des Metallrohrs durchgeführt werden.

Gemäß den Merkmalen des Anspruchs 7 wird die bevorzugte Anwendung der erfindungsgemäßen Verbindungsanordnung bei einer Kühlleitung für ein Kraftfahrzeug gesehen, wobei die aus Kunststoff bestehende Aufnahmehülse am freien Ende eines Schlauchs aus Kunststoff oder Gummi festgelegt ist.

Die Erfindung ist nachfolgend anhand eines in den Zeichnungen dargestellten Ausführungsbeispiels näher erläutert. Es zeigen:
- Figur 1: im vertikalen Längsschnitt eine Anordnung zur Verbindung eines Metallrohrs mit einer Aufnahmehülse vor der Kupplung;
- Figur 2: einen vertikalen Querschnitt durch die Darstellung der Figur 1 entlang der Linie II-II;
- Figr 3: einen vertikalen Querschnitt durch die Darstellung der Figur 1 entlang der Linie III-III und
- Figur 4: im vertikalen Längsschnitt die Anordnung der Figur 1 im gekuppelten Zustand.

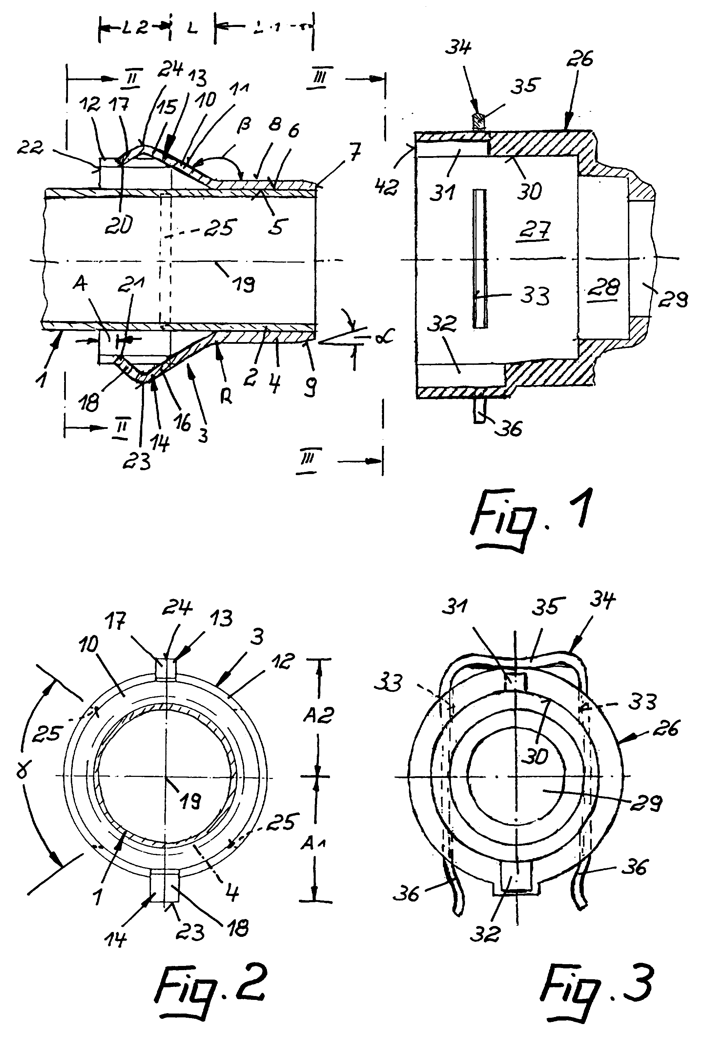

Mit 1 ist in den Figuren 1, 2 und 4 ein Metallrohr bezeichnet, wie es im Rahmen eines Kühlsystems für den Motor eines Kraftfahrzeugs Verwendung finden kann.

Auf das Ende 2 des Metallrohrs 1 ist eine metallische Steckhülse 3 gepreßt (Figuren 1 und 2). Die aus einem Rohrabschnitt umgeformte Steckhülse 3 weist einen im Innen- und Außendurchmesser zylindrisch gestalteten Fixierabschnitt 4 auf, der mit seiner inneren Oberfläche 5 auf die äußere Oberfläche 6 des Metallrohrs 1 gepreßt ist. Zwischen der Stirnseite 7 des Fixierabschnitts 4 und der äußeren Oberfläche 8 ist eine Einführungsfase 9 vorgesehen. Der Winkel α zwischen der Einführungsfase 9 und der äußeren Oberfläche 8 beträgt 10°.

An den Fixierabschnitt 4 schließt sich mit einem Radius R ein konischer Übergangsabschnitt 10 an. Der Winkel β zwischen der äußeren Oberfläche 8 des Fixierabschnitts 4 und der äußeren Oberfläche 11 des Übergangsabschnitts 10 beträgt 150°. Die axiale Länge L des Übergangsabschnitts 10 ist kürzer als die axiale Länge L1 des Fixierabschnitts 4 bemessen.

Der konische Übergangsabschnitt 10 geht in einen im Innen- und Außendurchmesser ebenfalls zylindrischen Kupplungsabschnitt 12 über. Der Innen- und Außendurchmesser des Kupplungsabschnitts 12 ist größer als der jeweilige Innen- und Außendurchmesser des Fixierabschnitts 4 bemessen. Auch die axiale Länge L2 des Kupplungsabschnitts 12 ist kleiner als die axiale Länge L1 des Fixierabschnitts 4 gestaltet.

Wie bei gemeinsamer Betrachtung der Figuren 1 und 2 ferner zu erkennen ist, sind aus dem Kupplungsabschnitt 12 in diametraler Versetzung Zungen 13, 14 ausgespart. Diese Zungen 13, 14 sind winkelförmig gekrümmt und weisen jeweils einen Schenkel 15, 16 auf, der mit den Wand des Übergangsabschnitts 10 fluchtet, während der andere Schenkel 17, 18 zur gemeinsamen Längsachse 19 von Steckhülse 3 und Metallrohr 1 weist. Die freien Enden 20, 21 dieser Schenkel 17, 18 enden im Dickenbereich der Wand des Kupplungsabschnitts 12 im Abstand A von dessen Stirnseite 22.

Die Figur 2 zeigt, daß die Zungen 13, 14 unterschiedlich breit bemessen sind. Die Kuppe 23 der breiteren Zunge 14 hat auch einen größeren Abstand A1 zu der die Längsachse 19 von Steckhülse 3 und Metallrohr 1 schneidenden Ebene als der Abstand A2 der Kuppe 24 der schmaler bemessenen Zunge 13 von dieser Ebene.

Desweiteren lassen die Figuren 1 und 2 noch erkennen, daß die Steckhülse 3 etwa in der den Wurzelbereich der Zungen 13, 14 schneidenden Querebene mit zwei tangentialen Schlitzen 25 zwischen den Zungen 13, 14 versehen ist. Die Schlitze 25 erstrecken sich über einen Öffnungswinkel γ von etwa 90°.

Aus den Figuren 1 und 3 ist ersichtlich, daß das Gegenstück zur Steckhülse 3 eine Aufnahmehülse 26 aus Kunststoff bildet. Die Aufnahmehülse 26 weist einen zylindrischen Kupplungsraum 27 auf, dessen Durchmesser dem Außendurchmesser des Kupplungsabschnitts 12 angepaßt ist. An diesen Kupplungsraum 27 schließt sich ein in der Länge kürzerer zylindrischer Aufnahmeraum 28 an, dessen Innendurchmesser an den Außendurchmesser des Fixierabschnitts 4 angeglichen ist. Dieser Aufnahmeraum 28 ist andererseits mit einer Bohrung 29 zur Überleitung des jeweiligen Mediums verbunden.

In die Oberfläche 30 des Kupplungsraums 27 sind in diametraler Versetzung zwei Nuten 31, 32 eingearbeitet, deren Tiefe und Breite der Ausgestaltung der Zungen 13, 14 angepaßt sind. Das heißt, die Nute 31 ist an die Zunge 13 und die Nute 32 an die Zunge 14 angepaßt. Die Nuten 31, 32 münden in die Stirnseite 42 der Aufnahmehülse 42.

Ferner ist zu erkennen, daß auch die Aufnahmehülse 26 mit tangentialen Schlitzen 33 im Umfangsbereich zwischen den Nuten 31, 32 versehen ist. Diese erstrecken sich etwa in der das innere Ende der kleineren Nute 31 schneidenden Querebene. Die tangentialen Schlitze 33 dienen der Einführung einer U-förmigen Klammer 34 aus einem federnden Material mit einem Steg 35 und zwei an den Steg 35 angesetzten Federschenkeln 36.

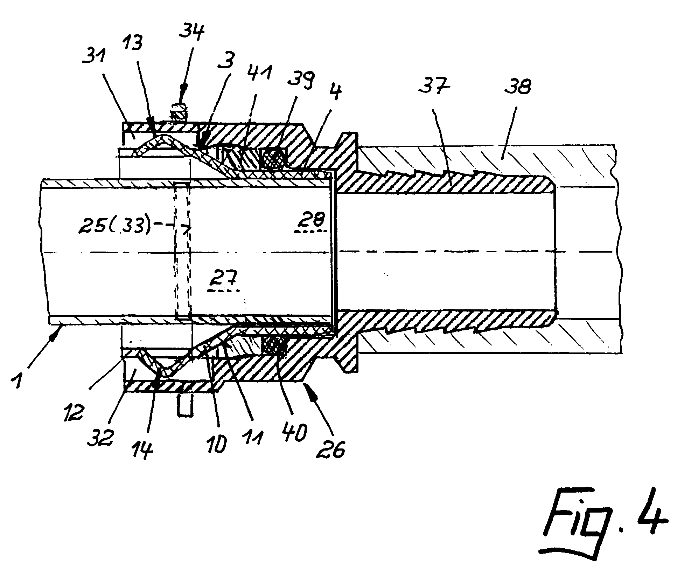

Zur dichten Kupplung des Metallrohrs 1 mit der Aufnahmehülse 26, insbesondere, wenn, wie die Figur 4 zeigt, die Aufnahmehülse 26 mit einem umfangsseitig verzahnten Stutzen 37 versehen ist, auf den das Ende eines Schlauchs 38 aus Kunststoff oder Gummi befestigt ist, wird zunächst in die Aufnahmehülse 26 ein O-Ring 39 als Dichtring eingesetzt und bis an die Schulter 40 zwischen dem Kupplungsraum 27 und dem Aufnahmeraum 28 geschoben. Neben dem Dichtring 39 wird noch ein trapezförmiger Stützring 41 plaziert.

Nunmehr kann das Metallrohr 1 mit der darauf befestigten Steckhülse 3 in die Aufnahmehülse 26 geschoben werden, bis die äußere Oberfläche 11 des konischen Übergangsabschnitts 10 an dem Stützring 41 zur Anlage gelangt und die tangentialen Schlitze 25 in der Steckhülse 3 mit den tangentialen Schlitzen 33 in der Aufnahmehülse 26 korrespondieren. Jetzt kann die U-förmige Klammer 34 in die Schlitze 25, 33 eingeführt und auf diese Art und Weise das Metallrohr 1 zug- und druckfest, jedoch lösbar mit der Aufnahmehülse 26 gekuppelt werden.

Zum Entkuppeln von Metallrohr 1 und Aufnahmehülse 26 ist es lediglich erforderlich, die Klammer 34 quer aus den Schlitzen 25, 33 und das Metallrohr 1 mit der Steckhülse 3 aus der Aufnahmehülse 26 zu ziehen.

## Patentansprüche

1. Anordnung zum dichten Anschluß eines Metallrohrs (1) an eine Aufnahmehülse (26), die innenseitig zwei einander diametral gegenüberliegende, in ihre Stirnseite (42) auslaufende Nuten (31, 32) für daran angepaßte radiale Vorsprünge (13, 14) an einer auf dem Metallrohr (1) befestigten Steckhülse (3) aufweist, wobei Aufnahmehülse (26) und Steckhülse (3) durch eine tangentiale Schlitze (25, 33) in den beiden Hülsen (3, 26) durchfassende U-förmige Klammer (34) zug- und druckfest, jedoch lösbar miteinander kuppelbar sind, **dadurch gekennzeichnet**, daß die aus Metall gebildete Steckhülse (3) einen im Innen- und Außendurchmesser zylindrisch gestalteten Fixierabschnitt (4) und einen im Innen- und Außendurchmesser demgegenüber größeren zylindrischen Kupplungsabschnitt (12) aufweist, wobei Fixierabschnitt (4) und Kupplungsabschnitt (12) durch einen konischen Übergangsabschnitt (10) mit gleichbleibender Wanddicke einstückig miteinander verbunden sind, und die radialen Vorsprünge als aus dem Kupplungsabschnitt (12) ausgesparte und relativ zum Kupplungsabschnitt (12) radial nach außen abgewinkelte, im wesentlichen axial ausgerichtete Zungen (13, 14) geformt sind.

2. Anordnung nach Anspruch 1, **dadurch gekennzeichnet**, daß die Zungen (13, 14) winkelförmig gekrümmt sind und jeweils einen Schenkel (15, 16) besitzen, der mit dem Übergangsabschnitt (10) fluchtet, während der andere Schenkel (17, 18) zur Längsachse (19) der Steckhülse (3) weist und sein freies Ende (20, 21) im Dickenbereich der Wand des Kupplungsabschnitts (12) im Abstand (A) von dessen Stirnseite (22) endet.

3. Anordnung nach Anspruch 1 oder 2, **dadurch gekennzeichnet**, daß am freien Ende des Fixierabschnitts (4) eine Einführungsfase (9) zwischen der Stirnseite (7) und der äußeren Oberfläche (8) vorgesehen ist.

4. Anordnung nach einem der Ansprüche 1 bis 3, **dadurch gekennzeichnet**, daß der Fixierabschnitt (4) auf das Metallrohr (1) gepreßt ist.

5. Anordnung nach einem der Ansprüche 1 bis 4, **dadurch gekennzeichnet**, daß der Fixierabschnitt (4) mit dem Metallrohr (1) durch Schweißen verbunden ist.

6. Anordnung nach einem der Ansprüche 1 bis 4, **dadurch gekennzeichnet**, daß der Fixierabschnitt (4) durch Löten mit dem Metallrohr (1) verbunden ist.

7. Anordnung nach einem der Ansprüche 1 bis 6, in der Anwendung auf die Verbindung einer metallischen Kühlleitung (1) für ein Kraftfahrzeug mit einem mit einer aus Kunststoff bestehenden Aufnahmehülse (26) versehenen Schlauch (38) aus Kunststoff oder Gummi.

## Claims

1. An arrangement for the sealing-tight connection of a metal tube (1) to a receiving sleeve (26) which has on the inside two diametrically opposite grooves (31, 32) terminating at its end face (42) for matching radial projections (13, 14) on an adapter (3) fixed on the metal tube (1), the receiving sleeve (26) and adapter (3) being adapted to be coupled together so as to be resistant to tension and compression but releasable, by means of a U-shaped clamp (34) extending through tangential slots (25, 33) in the adapter and the receiving sleeve (3, 26), characterised in that the adapter (3), which is made of metal, has a fixing portion (4) which is cylindrical in its inside and outside diameter, and a cylindrical coupling portion (12) which is larger in its inside and outside diameter than the fixing portion (4), the fixing portion (4) and the coupling portion (12) being integrally interconnected by a conical transition section (10) of constant wall thickness, and the radial projections are formed as substantially axially aligned tongues (13, 14) which are bent radially outwards relatively to the coupling portion (12) and which are recessed therefrom.

2. An arrangement according to claim 1, characterised in that the tongues (13, 14) are angularly curved and each have a limb (15, 16) which is alignment with the transition portion (10) while the other limb (17, 18) points towards the longitudinal axis (19) of the adapter (3) and its free end (20, 21) terminates in the region of the thickness of the wall of the coupling portion (12) at a distance (A) from its end face (22).

3. An arrangement according to claim 1 or 2, characterised in that an introduction chamfer (9) is provided at the free end of the fixing portion (4) between the end face (7) and the outer surface (8).

4. An arrangement according to any one of claims 1 to 3, characterised in that the fixing portion (4) is pressed on to the metal tube (1).

5. An arrangement according to any one of claims 1 to 4, characterised in that the fixing portion (4) is welded to the metal tube (1).

6. An arrangement acccrding to any one of claims 1 to 4, characterised in that the fixing portion (4) is soldered to the metal tube (1).

7. An arrangement according to any one of claims 1 to 6, applied to the connection of a metal cooling pipe (1) for a motor vehicle to a plastic or rubber hose (38) provided with a plastic receiving sleeve (26).

## Revendications

1. Dispositif pour le raccordement étanche d'un tube métallique (1) sur une douille de réception (26), qui comporte intérieurement deux gorges (31, 32) situées diamétralement opposées l'une de l'autre, gorges qui dans leurs côtés frontaux (42) vont en s'élargissant et sont destinées à des saillies radiales adaptées à celles-ci (13, 14) sur une douille d'enfichage (3) fixée sur l'un des tubes métalliques (1), la douille de réception (26) et la douille d'enfichage (3) pouvant être accouplées entre elles de façon amovible par une bride de fixation ou agrafe en forme de U (34) traversant une fente tangentielle (25, 33) dans les deux douilles (3, 26) et permettant l'accouplement résistant à la traction et à la compression mais amovible, caractérisé en ce que la douille d'enfichage réalisée à partir de métal (3) présente une section de fixation (4) formée cylindriquement dans le diamètre interne et dans le diamètre externe et une section d'accouplement cylindrique (12) plus grande dans le diamètre interne et externe, la section de fixation (4) et la section d'accouplement (12) étant raccordées entre elles pour former une seule pièce par une section de transition conique (10) ayant une épaisseur de paroi constante et les saillies radiales, ménagées à partir de la section d'accouplement (12) et coudées radialement vers l'extérieur par rapport à la section d'accouplement (12), sont essentiellement formées à partir de languettes (13, 14) dirigées axialement.

2. Dispositif selon la revendication 1, caractérisé en ce que les languettes (13, 14) sont courbées angulairement et possèdent respectivement une branche (15, 16) qui s'aligne sur la section de transition (10) tandis que l'autre branche (17, 18) est dirigée vers l'axe longitudinal (19) de la douille d'enfichage (3) et son extrémité libre (20, 21) aboutit dans la zone d'épaisseur de la paroi de la section d'accouplement (12) à une distance (A) par rapport à son côté frontal (22).

3. Dispositif selon la revendication 1 ou 2, caractérisé en ce que sur l'extrémité libre de la section de fixation (4) est prévu un fraisage d'introduction (9) entre le côté frontal (7) et la surface extérieure (8).

4. Dispositif selon l'une des revendications 1 à 3, caractérisé en ce que la section de fixation (4) est comprimée sur le tube métallique (1).

5. Dispositif selon l'une des revendications 1 à 4, caractérisé en ce que la section de fixation (4) est raccordée au tube métallique (1) par soudage.

6. Dispositif selon l'une des revendications 1 à 4, caractérisé en ce que la section de fixation (4) est raccordée par brasage avec le tube métallique (1).

7. Dispositif selon l'une des revendications 1 à 6, dans l'application sur le raccordement d'une conduite de refroidissement métallique (1) pour un véhicule automobile avec un tuyau flexible (38) muni d'une douille de réception (26) constituée par une matière synthétique ou un caoutchouc.
